# EUROPÄISCHE PATENTSCHRIFT

(11) **EP 2 341 273 B1**
(45) Veröffentlichungstag und Bekanntmachung des Hinweises auf die Patenterteilung: **09.05.2012**
(21) Anmeldenummer: 10405002.6
(22) Anmeldetag: 05.01.2010
(51) Int. Cl.: F16L 33/025, F16L 33/207

(54) **Rohrklemme**
Tube clamp
Serre-joint

(43) Veröffentlichungstag der Anmeldung: 06.07.2011
(73) Patentinhaber: Geberit International AG, 8645 Jona (CH)
(72) Erfinder: Baggenstos, Roger, 8645 Jona (CH); Hausheer, Roman, 6330 Cham (CH); Huber, René, 8645 Jona (CH)
(74) Vertreter: Groner, Manfred

(56) Entgegenhaltungen:
- US-A1- 2007 134 980
- US-A1- 2008 012 303

## Beschreibung

Die Erfindung betrifft eine Rohrklemme zum Verbinden eines Rohres mit einem in ein Ende des Rohres einsteckbaren Anschlussstück, mit einem Klemmring, der entlang seines Umfanges einen ringförmigen Abschnitt und ein sich radial nach aussen erstreckendes Ohr aufweist, das von einem Werkzeug zusammenpressbar ist, mit einem Klemmringhalter, in dem der Klemmring gelagert ist und mit einer Ohrspaltlasche, welche den ringförmigen Abschnitt im Bereich eines Spaltes des Ohrs überbrückt.

Klemmringe mit einem Ohr, das mit einer Zange zusammenpressbar ist um den Klemmring auf einem zu verbindenden Rohrende festzuziehen, sind beispielsweise als Schlauchbriden seit langem bekannt. Beim Zusammenpressen des Ohrs schliesst sich ein Spalt des Klemmringes. Beim Zusammenziehen des Klemmringes wird das zu verbindende Rohrende im Bereich dieses Spaltes nicht beaufschlagt. Die Pressung des Rohrendes ist deshalb ungleichmässig. Um dies zu vermeiden ist es bekannt, diesen Spalt mit einer Ohrspaltlasche zu überbrücken. Bei der Rohrklemme nach der WO 2007/101110 und der US 2007/0134180 ist diese Ohrspaltlasche ein Abbug des Ohrs. Eine Ohrspaltlasche ist ebenfalls bei der Rohrklemme nach der DE-U-20 2009 000 508 vorgesehen. Auch hier ist die Ohrspaltlasche ein Abbug des Klemmrings im Bereich des Ohrs.

Der Erfindung liegt die Aufgabe zugrunde, eine Rohrklemme der genannten Art zu schaffen, die noch einfacher herstellbar ist und die dennoch eine runde und sichere Verpressung eines Röhrendes ermöglicht.

Die Aufgabe ist bei einer gattungsgemässen Rohrklemme dadurch gelöst, dass die Ohrspaltlasche am Klemmringhalter angebracht ist. Bei der erfindungsgemässen Rohrklemme kann der Klemmring ohne Ohrspaltlasche und damit wesentlich einfacher hergestellt werden. Da die Ohrspaltlasche bei der erfindungsgemässen Rohrklemme am Klemmringhalter angebracht ist, kann diese Lasche wesentlich einfacher als Kunststoffteil beispielsweise im Spritzgussverfahren hergestellt werden. Ein Umbiegen eines Blechteil oder dergleichen ist somit nicht erforderlich. Die Herstellung ist dann besonders einfach und kostengünstig, wenn die Ohrspaltlasche am Klemmringhalter angeformt ist. Der Klemmringhalter kann hierbei mehrteilig, beispielsweise zweiteilig ausgebildet sein. Die Ohrspaltlasche ist dann an einem dieser Teile angeformt. Die Teile können gemäss einer Weiterbildung der Erfindung durch Rastung miteinander verbunden sein.

Nach einer Weiterbildung der Erfindung weist die Ohrspaltlasche eine Sollbruchstelle auf, so dass sie sich beim Verpressen vom Klemmringhalter löst. Die Ohrspaltlasche legt sich dann an die Aussenseite des Rohrendes an und ermöglicht ein besonders rundes und homogenes Verpressen des Rohrendes. Nach einer Weiterbildung der Erfindung ist die Sollbruchstelle als Filmscharnier ausgebildet.

Nach einer Weiterbildung der Erfindung ist vorgesehen, dass der Klemmringhalter einen Rohranschlagflansch aufweist und dass die Ohrspaltlasche an diesem Rohranschlagflansch befestigt und insbesondere angeformt ist. Der Rohranschlagflansch dient gemäss dieser Weiterbildung somit zur Positionierung des Rohrendes am Anschlussstück und zudem zur Befestigung der Ohrspaltlasche. Denkbar ist aber auch eine Ausführung, bei welcher das Rohrende am Anschlussstück, beispielsweise an einem Bund eines Fittings positioniert wird. Zur Kontrolle des Rohranschlages ist gemäss einer Weiterbildung der Erfindung vorgesehen, dass der Klemmringhalter wenigstens ein Sichtfenster aufweist. Durch eine visuelle Kontrolle ist es dann möglich, den Anschlag des Rohrendes zu kontrollieren.

Nach einer Weiterbildung der Erfindung ist vorgesehen, dass der Klemmringhalter aus wenigstens zwei Teilen besteht, die miteinander verbunden sind. Als Verbindung ist hier insbesondere eine Rastverbindung vorgesehen. Gemäss einer Weiterbildung der Erfindung ist einer dieser beiden Teile ringförmig ausgebildet und ist mit der Ohrspaltlasche versehen, die axial vom Ring absteht. Nach einer Weiterbildung der Erfindung ist einer dieser beiden Teile als Halbschale ausgebildet und überbrückt im zusammengebauten Zustand die Ohrspaltlasche mit einem Steg. Zum Zusammenpressen des Ohres, kann dieser Steg mit einer Zange untergriffen werden.

Nach einer Weiterbildung der Erfindung weist der Klemmringhalter einen Kalibrierbereich auf. Dieser Bereich befindet sich vorzugsweise am vorderen Ende des Klemmringhalters, an dem das zu verbindende Rohrende eingeschoben wird. Dieser Kalibrierbereich besitzt vorzugsweise eine konische Fläche, an welcher das Rohrende beim Einschieben in den Klemmringhalter zentriert und wenigstens teilweise kalibriert wird.

Der Klemmringhalter ist gemäss einer Weiterbildung der Erfindung mit Rastmitteln am Anschlussstück befestigt. Das Anschlussstück ist insbesondere ein Fitting mit wenigstens einem Stutzen, der von der Rohrklemme umgeben ist. Das Anschlussstück kann aber beispielsweise auch ein Stutzen einer Armatur sein.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: ein Schnitt durch eine Verbindung mit einer erfindungsgemässen Rohrklemme, einem Fitting sowie einem aufgeschobenen Rohrende,
- Fig. 2: eine räumliche Ansicht eines Klemmringhalters,
- Fig. 3: eine räumliche Ansicht einer geschnittenen Verbindung gemäss Fig. 1,
- Fig. 4: eine räumliche Ansicht eines Klemmrings,
- Fig. 5: ein Längsschnitt durch eine Verbindung mit einem Anschlussstück, einer Rohrklemme gemäss einer Variante und einem aufgeschobenen Rohrende,
- Fig. 6: eine räumliche Ansicht des Klemmringhalters gemäss der Fig. 5,
- Fig. 7: eine räumliche Ansicht einer geschnittenen Verbindung gemäss Fig. 5,
- Fig. 8: eine räumliche Ansicht eines Klemmringes,
- Fig. 9: eine weitere räumliche Ansicht des Klemmringhalters gemäss Fig. 6,
- Fig. 10: ein Längsschnitt durch eine Verbindung mit einer weiteren Variante des erfindungsgemässen Klemmringhalters,
- Fig. 11: eine räumliche Darstellung eines Teils des Klemmringhalters gemäss Fig. 10,
- Fig. 12: eine räumliche Ansicht der Verbindung gemäss Fig. 10, wobei diese geschnitten ist,
- Fig. 13: eine räumliche Ansicht eines zweiten Teils des Klemmringhalters nach Fig. 10 und
- Fig. 14: eine weitere räumliche Ansicht des Klemmrings.
- Fig. 15: ein Längsschnitt durch eine Verbindung mit einem Klemmringhalter gemäss einer weiteren Variante,
- Fig. 16: eine räumliche Ansicht eines Teils des Klemmringhalters,
- Fig. 17: eine räumliche Ansicht der Verbindung gemäss Fig. 15, wobei diese geschnitten ist,
- Fig. 18: eine räumliche Ansicht eines zweiten Teils des Klemmringhalters,
- Fig. 19: eine weitere räumliche Ansicht des Klemmrings,

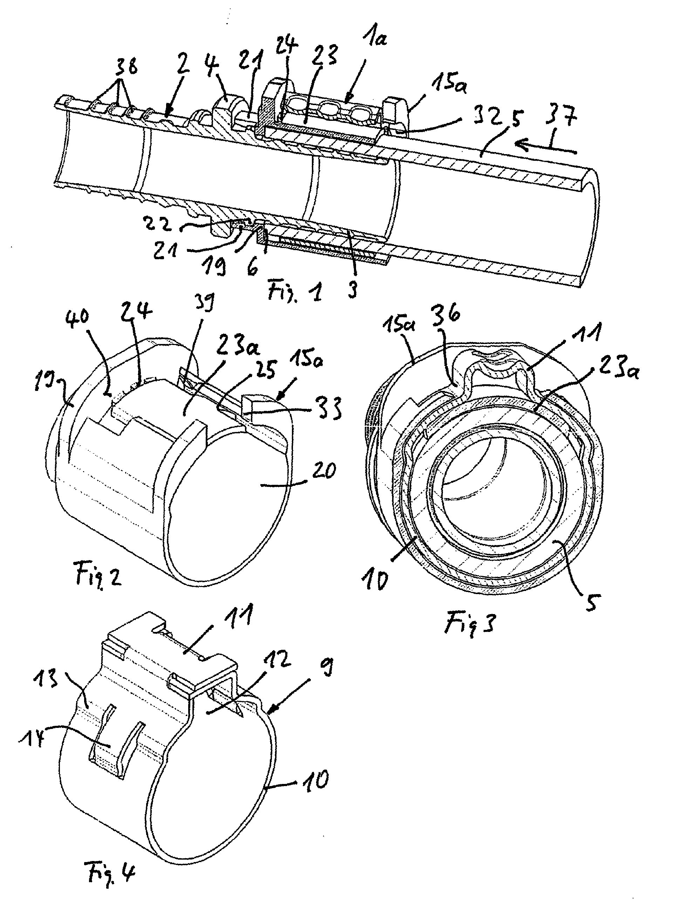

Die Figuren 1 bis 4 zeigen ein erstes Ausführungsbeispiel einer erfindungsgemässen Rohrklemme 1a. Diese Rohrklemme 1a verbindet gemäss Fig. 1 ein Rohr 5, beispielsweise für eine Wasserleitung, mit einem Anschlussstück 2, das bei der gezeigten Ausführung ein Doppelfitting mit einem Bund 4 ist. Das Rohr 5 ist insbesondere ein Wasserrohr, beispielsweise ein biegbares Verbundrohr. Um das Anschlussstück 2 mit dem Rohr 5 zu verbinden, wird dieses gemäss Pfeil 37 auf einen Stutzen 3 des Anschlussstücks 2 aufgeschoben, bis eine Frontseite 6 des Rohres 5 an einem Rohranschlagflansch 19 der Rohrklemme 1a ansteht. Anschliessend wird die Rohrklemme 1a mit einer hier nicht gezeigten Zange verpresst. Das Rohr 5 ist dann im wesentlichen nicht lösbar mit dem Anschlussstück 2 verbunden.

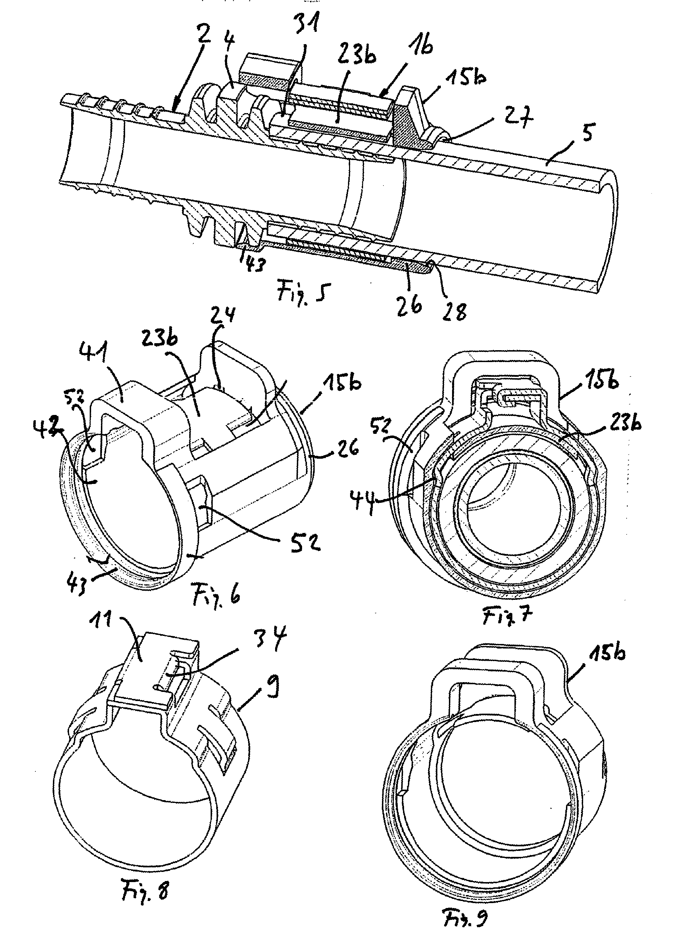

Die Rohrklemme 1a besitzt einen Klemmring 9, der in einem Klemmringhalter 15a gelagert ist. Der Klemmring 9 ist beispielsweise aus einem Abschnitt eines Blechbandes hergestellt und besitzt gemäss Fig. 4 einen ringförmigen Abschnitt 10 und ein sogenanntes Ohr 11, das bezüglich des ringförmigen Abschnittes 10 radial vorsteht. Der ringförmige Abschnitt 10 ist im Bereich des Ohres 11 durch einen Spalt 12 unterbrochen. Der ringförmige Abschnitt 10 besitzt zwei radial etwas vorstehende Zungen 14 sowie jeweils zwischen dieser Zunge 14 und dem Ohr 11 eine Schulter 13. Der Klemmring 9 ist wie ersichtlich geschlossen, wobei gemäss der Fig. 8 ein Abbug 34 die beiden Enden im Bereich des Ohrs 11 miteinander verbindet. Das Ohr 11 kann unterschiedlich ausgebildet sein. Es besitzt gemäss Fig. 3 zwei seitliche Griffmulden 36, so dass das Ohr 11 mit einer hier nicht gezeigten Zange gefasst und zusammengedrückt werden kann. Der ringförmige Abschnitt 10 wird damit verkleinert und legt sich um das Rohr 5 und verpresst dieses, so dass sich Rippen 38 des Stutzens 3 innenseitig in das Rohr 5 eingraben. Der Klemmring 9 besteht vorzugsweise aus einem geeigneten Metall. Beim Montieren wird der Klemmring 9 durch eine Öffnung 32 (Fig. 1) in eine Ausnehmung 20 des Klemmringhalters 15a eingesetzt. Das Ohr 11 wird hierbei durch eine in Fig. 2 gezeigte Öffnung 33 in ein Fenster 39 des Klemmringhalters 15a eingeschoben. Hierzu kann die Öffnung 33 aufgeweitet werden. Das Ohr 11 durchragt das Fenster 39 und steht somit gemäss Fig. 3 an der Aussenseite des Klemmringhalters 15a radial vor. Das Ohr 11 kann somit von aussen mit den Backen einer Zange gefasst werden.

Der Klemmringhalter 15a besitzt eine Ohrspaltlasche 23a, die an einer Innenseite 40 des Rohranschlagflansches 19 befestigt ist. Die Befestigung erfolgt mit einer Sollbruchstelle 24, die als Filmscharnier ausgebildet ist. Vorzugsweise ist die Ohrspaltlasche 23a am Rohranschlagflansch 19 angeformt, grundsätzlich wäre hier aber auch eine andere Verbindung, beispielsweise eine Rastverbindung denkbar. Die Ohrspaltlasche 23A erstreckt sich axial unterhalb des Ohres 11 und schliesst damit den Spalt 12. Wie die Fig. 3 zeigt, ist die Ohrspaltlasche 23a wesentlich breiter als der Spalt 12 und erstreckt sich somit in beiden Umfangsrichtungen über diesen hinaus. Das Rohr 5 ist im zu verpressenden Bereich somit einerseits vom ringförmigen Abschnitt 10 und andererseits von der Ohrspaltlasche 23a umgeben. Beim Verpressen wirkt somit rundum eine Kraft auf das Rohr 5, so dass eine homogene und runde Verpressung des Rohrs 5 gewährleistet ist. Beim Verpressen wirkt eine radiale nach innen gerichtete Kraft auf die Ohrspaltlasche 23a. Die Sollbruchstelle 24 bricht dadurch und die Ohrspaltlasche 23a kann somit vollständig radial nach innen an das Rohr 5 angepresst werden. An der Ohrspaltlasche 23a sind seitlich zwei Lappen 25 angeformt, die sich jeweils in einer Umfangsrichtung des Rohres 5 erstrecken und die jeweils eine der beiden Zungen 14 untergreifen. Die Lappen 25 führen die Ohrspaltlasche 23a während der Verpressung und halten den Klemmring 9 in axialer Richtung fest. Die Schultern 13 sind so ausgebildet, dass sie sich beim Verpressen des Ohres 11 in Umfangsrichtung zur Ohrspaltlasche 23a hin verschieben können. Die Fig. 3 zeigt den Klemmring 9 im nicht verpressten Zustand. Im verpressten Zustand sind dann die Schultern 13 in Umfangsrichtung gesehen näher an der Ohrspaltlasche 23a, oder liegen sogar an dieser an.

Der Klemmringhalter 15a ist vorzugsweise auf dem Anschlussstück 2 vormontiert. Hierbei ist der Klemmringhalter 15a am Anschlussstück 2 mittels Rastzungen 21 und einem Rastelement 22 des Anschlussstückes 2 verrastet. Das Rastelement 22 ist eine umlaufende radial vorstehende Rippe des Stutzens 3. Um das Rohr 5 mit dem Anschlussstück 2 zu verbinden, muss somit lediglich das Rohr 5 in Richtung des Pfeiles 37 durch die Öffnung 32 in den Zwischenraum zwischen dem Klemmring 9 und dem Stutzen 3 bis zum Rohranschlagflansch 19 eingeschoben und anschliessend der Klemmring 9 mit einer Zange am Ohr 11 verpresst werden.

Die Figuren 5 bis 9 zeigen eine Rohrklemme 1b nach einer Variante. Die oben genannten grundsätzlichen Konstruktionsmerkmale gelten auch bei dieser Ausführung. Insbesondere ist der bereits oben beschriebene Klemmring 9 auch hier vorgesehen. Der Klemmringhalter 15b ist hier jedoch so ausgebildet, dass der Klemmring 9 von der Rückseite in den Klemmringhalter 15b eingesetzt ist. Das Rohr 5 wird bis zu einem Anschlag am Bund 4 des Anschlussstückes 2 eingeschoben. Der oben erwähnte Rohranschlagflansch 19 ist hier somit nicht vorgesehen. Zwei Sichtfenster 52 am Klemmringhalter 15b ermöglichen eine Kontrolle über den Anschlag des Rohres 5 am Bund 4. Der Klemmringhalter 15a besitzt gemäss Fig. 6 an der Rückseite eine Ausnehmung 42, die im Wesentlichen korrespondierend zum Aussenprofil des Klemmringes 9 ausgebildet ist. Dem Ohr 11 entspricht hier eine Ausbuchtung 41, durch welche das Ohr 11 hindurchgeschoben werden kann. Der Klemmring 9 kann somit von der Rückseite in die Ausnehmung 42 des Klemmringhalters 15a eingeschoben werden. Eine Ohrspaltlasche 23b überbrückt auch hier den Spalt 12 des Klemmringes 9, wie dies oben erläutert ist. Die Ohrspaltlasche 23b ist hier jedoch an einem ringförmigen Kalibrierbereich 26 angeformt. Dieser Kalibrierbereich 26 besitzt innenseitig eine konische Fläche 28, an welcher das Rohr 5 beim Einschieben in die Rohrklemme 1b kalibriert wird. Die Funktion und die Vorteile der Ohrspaltlasche 23b entsprechen derjenigen der oben erläuterten Ohrspaltlasche 23a.

Am hinteren Ende besitzt der Klemmringhalter 15b eine Rastrippe 43, mit welcher er am Bund 4 des Anschlussstücks 2 lösbar verrastet ist. In Axialrichtung ist der Klemmring 9 durch den Kalibrierbereich 26 und durch den Bund 4 gehalten. Damit sich der Klemmring 9 in Umfangsrichtung im Klemmringhalter 15b nicht verdrehen kann, besitzt der Klemmringhalter 15b gemäss Fig. 7 eine Innenkontur 44, die bereichsweise der Aussenkontur des Klemmringes 9 entspricht. Das Ohr 11 ist hier somit jeweils im Klemmringhalter 15b so positioniert, dass es zum Verpressen mit der Zange gefasst werden kann.

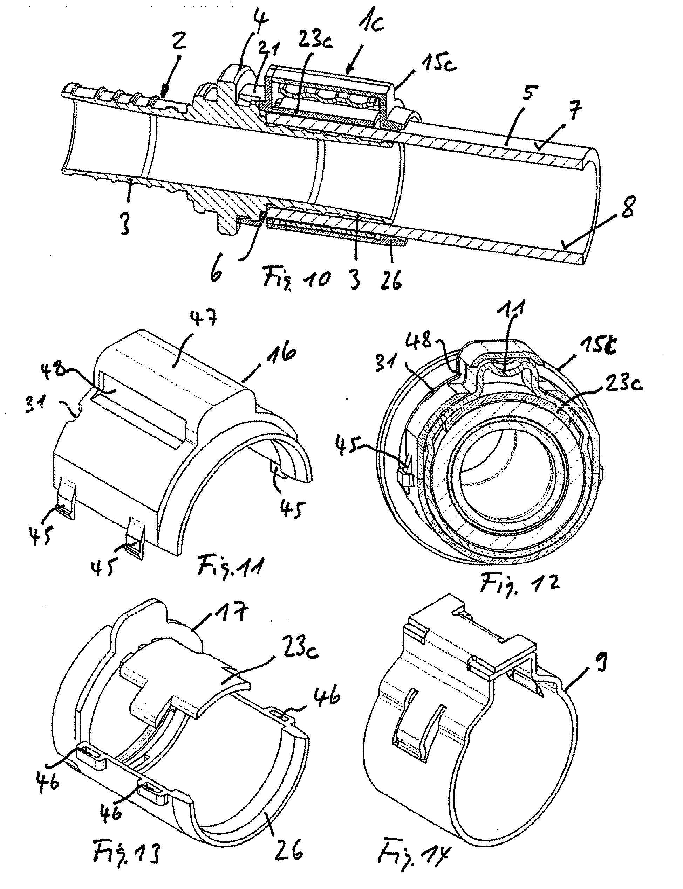

Die Figuren 10 bis 14 zeigen eine Rohrklemme 1c gemäss einer weiteren erfindungsgemässen Variante. Diese Rohrklemme 1c unterscheidet sich von den oben erwähnten Varianten im Wesentlichen bezüglich der Konstruktion des Klemmringhalters 15c. Dieser besteht aus den in den Figuren 11 und 13 gezeigten Halteteilen 16 und 17. Der Halteteil 16 ist wie ersichtlich halbschalenförmig ausgebildet und besitzt Rastzungen 45. An einer Oberseite ist ein Steg 47 angeformt, der zwei seitliche gegenüberliegende Fenster 48 aufweist, die für den Durchgriff der Zangenbacken vorgesehen sind. Der Steg 47 überdeckt eine Ohrspaltlasche 23c, die ansonst wie oben erläutert ausgebildet ist. Diese Ohrspaltlasche 23c ist an dem in Fig. 3 gezeigten Halteteil 17 angeformt. Der Halteteil 17 besitzt Rastöffnungen 46, in die im zusammengebauten Zustand die Rastzungen 45 eingreifen. Die Figuren 10 und 12 zeigen den Klemmringhalter 15c im zusammengebauten Zustand. Ein Kalibrierbereich 26 ist ebenfalls vorgesehen. Bei der Montage wird der Klemmring 9 zuerst in den Halteteil 17 eingesetzt. Anschliessend wird der Halteteil 16 auf den Halteteil 17 aufgesetzt und mit diesem verrastet. Der Klemmring 9 ist dann im Klemmringhalter 15c radial und axial gehalten. Das Rohr 11 kann durch die Fenster 48 mit einer Zange gefasst und verpresst werden. Ansonst gelten die oben erwähnten Merkmale und Vorteile. Sichtfenster 31 ermöglichen es, den Anschlag des Rohres 5 am Bund 4 zu kontrollieren.

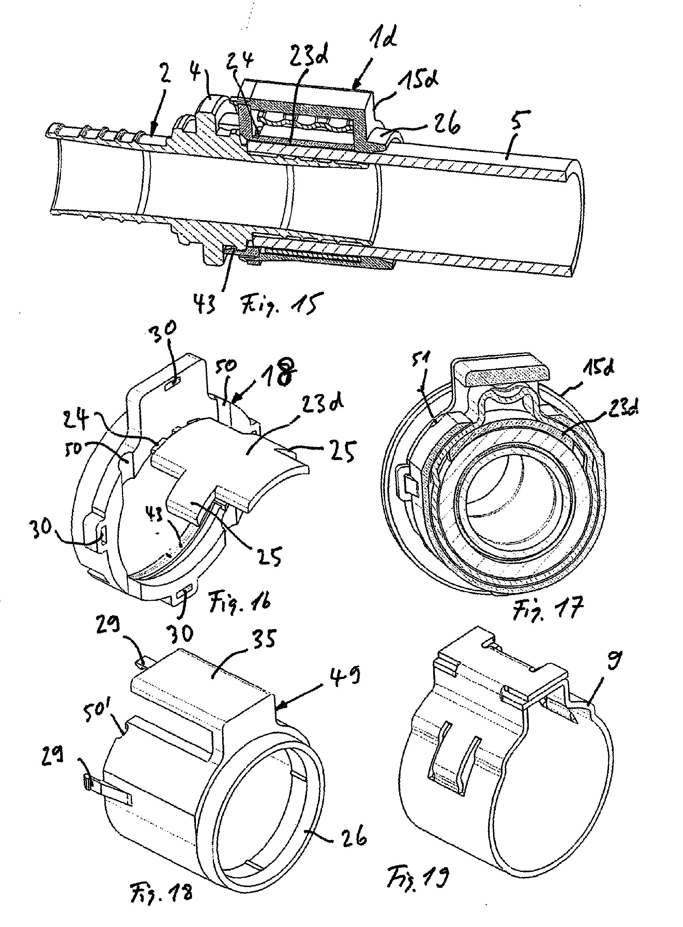

Die in den Figuren 15 bis 19 gezeigte Rohrklemme 1d besitzt einen Klemmringhalter 15d, der aus zwei Halteteilen 18 und 49 zusammengesetzt ist. Eine Rastrippe 43, mit welcher der Klemmringhalter 15d am Anschlussstück 2 befestigt ist, wird durch den Halteteil 18 gebildet, der wie ersichtlich ringförmig ausgebildet ist und an dem eine Ohrspaltlasche 23d mit einer Sollbruchstelle 24 angeformt ist. Der Halteteil 49 ist hülsenförmig ausgebildet und bildet den Kalibrierbereich sowie einen Steg 35, welcher im Wesentlichen dem Steg 47 entspricht. Die Halteteile 18 und 49 sind miteinander verrastbar und besitzen hierzu Rastzungen 29 und entsprechende Rastöffnungen 30. Beim Montieren wird der Klemmring 9 auf den Halteteil 18 aufgesetzt und anschliessend wird der Halteteil 49 aufgesetzt und verrastet. Durch Ausnehmungen 50 und 50' am Halter 18 bzw. 49 werden zwei gegenüberliegende Sichtfenster 51 (Fig. 17) gebildet, durch welche eine visuelle Kontrolle über den Anschlag des Rohres 5 am Bund 4 möglich ist.

### BEZUGSZEICHENLISTE

- 1a, 1b, 1c, 1d: Rohrklemme
- 2: Anschlussstück
- 3: Stutzen
- 4: Bund
- 5: Rohr
- 6: Frontseite
- 7: Aussenseite
- 8: Innenseite
- 9: Klemmring
- 10: ringförmiger Abschnitt
- 11: Ohr
- 12: Spalt
- 13: Schulter
- 14: Zunge
- 15a, 15b, 15c, 15d: Klemmringhalter
- 16: Halteteil
- 17: Halteteil
- 18: Halteteil
- 19: Rohranschlagflansch
- 20: Ausnehmung
- 21: Rastzunge
- 22: Rastelement
- 23a, 23b, 23c, 23d: Ohrspaltlasche
- 24: Sollbruchstelle
- 25: Lappen
- 26: Kalibrierbereich
- 27: Öffnung
- 28: Fläche
- 29: Rastzunge
- 30: Rastöffnung
- 31: Sichtfenster
- 32: Öffnung
- 33: Öffnung
- 34: Abbug
- 35: Steg
- 36: Griffmulde
- 37: Pfeil
- 38: Rippen
- 39: Fenster
- 40: Innenseite

## Patentansprüche

1. Rohrklemme zum Verbinden eines Rohres (5) mit einem in ein Ende des Rohres (5) einsteckbaren Anschlussstück (2), mit einem Klemmring (9), der entlang seines Umfanges einen ringförmigen Abschnitt (10) und ein sich radial nach aussen erstreckendes Ohr (11) aufweist, das von einem Werkzeug zusammenpressbar ist, mit einem Klemmringhalter (15a, 15b, 15c, 15d), in dem der Klemmring (9) gelagert ist und mit einer Ohrspaltlasche (23a, 23b, 23c, 23d), welche den ringförmigen Abschnitt (10) im Bereich eines Spaltes (12) des Ohrs (11) überbrückt, **dadurch gekennzeichnet, dass** die Ohrspaltlasche (23a, 23b, 23c, 23d) am Klemmringhalter (15a, 15b, 15c, 15d) angebracht ist.

2. Rohrklemme nach Anspruch 1, **dadurch gekennzeichnet, dass** die Ohrspaltlasche (23a - 23d) am Klemmringhalter (15a - 15d) angeformt ist.

3. Rohrklemme nach Anspruch 1 oder 2, **dadurch gekennzeichnet, dass** die Ohrspaltlasche (23a - 23d) eine Sollbruchstelle (24) aufweist, so dass sie sich beim Verpressen des Klemmringes (9) vom Klemmringhalter (15a - 15d) löst.

4. Rohrklemme nach Anspruch 3, **dadurch gekennzeichnet, dass** die Sollbruchstelle (24) als Filmscharnier ausgebildet ist.

5. Rohrklemme nach Anspruch 4, **dadurch gekennzeichnet, dass** die Ohrspaltlasche (23a - 23d) sich von der Sollbruchstelle (24) aus axial erstreckt.

6. Rohrklemme nach einem der Ansprüche 1 bis 5, **dadurch gekennzeichnet, dass** der Klemmringhalter (15a) einen Rohranschlagflansch (19) aufweist.

7. Rohrklemme nach einem der Ansprüche 1 bis 6, **dadurch gekennzeichnet, dass** der Klemmringhalter (1c, 1d) aus einem ersten und einem zweiten Teil (16, 17; 18, 49) besteht, die miteinander verbunden sind.

8. Rohrklemme nach Anspruch 7, **dadurch gekennzeichnet, dass** die wenigstens zwei Teile (16, 17; 18, 49) miteinander verrastet sind.

9. Rohrklemme nach einem der Ansprüche 1 bis 8, **dadurch gekennzeichnet, dass** der Klemmring (9) axial von vorne oder von hinten in den Klemmringhalter (15a - 15d) eingeschoben ist.

10. Rohrklemme nach einem der Ansprüche 1 bis 9, **dadurch gekennzeichnet, dass** der Klemmringhalter (15c, 15b, 15d) an einem vorderen Ende einen Kalibrierbereich (26) zum Kalibrieren des anzuschliessenden Rohres (5) aufweist.

11. Rohrklemme nach einem der Ansprüche 1 bis 10, **dadurch gekennzeichnet, dass** der Klemmring (9) im Klemmringhalter (15a - 15d) verdrehsicher gehalten ist.

12. Rohrklemme nach einem der Ansprüche 1 bis 11, **dadurch gekennzeichnet, dass** der Klemmringhalter (15c, 15b, 15d) wenigsten ein Sichtfenster (51, 52) für eine Kontrolle des Rohranschlages aufweist.

13. Rohrklemme nach einem der Ansprüche 1 bis 12, **dadurch gekennzeichnet, dass** der Klemmringhalter (15a - 15d) Rastmittel (21, 43) zu seiner Befestigung am Anschlussstück (2) aufweist.

14. Rohrklemme nach einem der Ansprüche 1 bis 13, **dadurch gekennzeichnet, dass** sich die Ohrspaltlasche (23a - 23d) in Umfangsrichtung wenigstens auf einer Seite über den Spalt (12) hinaus erstreckt.

15. Rohrklemme nach einem der Ansprüche 1 bis 14, **dadurch gekennzeichnet, dass** der Klemmring (9) an Lappen (25) im Klemmringhalter (15a - 15d) axial gehalten ist.

## Claims

1. Pipe clamp for connecting a pipe (5) to a connecting piece (2) insertable into one end of the pipe (5), comprising a clamping ring (9), which along its periphery has an annular portion (10) and a radially outwardly extending ear (11), which ear is compressible by a tool, comprising a clamping ring holder (15a, 15b, 15c, 15d), in which the clamping ring (9) is mounted, and comprising an ear gap cover plate (23a, 23b, 23c, 23d), which bridges the annular portion (10) in the region of a gap (12) of the ear (11), **characterized in that** the ear gap cover plate (23a, 23b, 23c, 23d) is attached to the clamping ring holder (15a, 15b, 15c, 15d).

2. Pipe clamp according to Claim 1, **characterized in that** the ear gap cover plate (23a-23d) is moulded onto the clamping ring holder (15a-15d).

3. Pipe clamp according to Claim 1 or 2, **characterized in that** the ear gap cover plate (23a-23d) has a predetermined breaking point (24), so that it detaches from the clamping ring holder (15a-15d) when the clamping ring (9) is pressed.

4. Pipe clamp according to Claim 3, **characterized in that** the predetermined breaking point (24) is configured as a film hinge.

5. Pipe clamp according to Claim 4, **characterized in that** the ear gap cover plate (23a-23d) extends axially from the predetermined breaking point (24).

6. Pipe clamp according to one of Claims 1 to 5, **characterized in that** the clamping ring holder (15a) has a pipe stop flange (19).

7. Pipe clamp according to one of Claims 1 to 6, **characterized in that** the clamping ring holder (15c, 15d) consists of a first and a second part (16, 17; 18, 49), which are connected one to the other.

8. Pipe clamp according to Claim 7, **characterized in that** the at least two parts (16, 17; 18, 49) are latched together.

9. Pipe clamp according to one of Claims 1 to 8, **characterized in that** the clamping ring (9) is inserted into the clamping ring holder (15a-15d) axially from the front or rear.

10. Pipe clamp according to one of Claims 1 to 9, **characterized in that** the clamping ring holder (15c, 15b, 15d) has at a front end a calibration region (26) for calibrating the pipe (5) to be connected.

11. Pipe clamp according to one of Claims 1 to 10, **characterized in that** the clamping ring (9) is held in the clamping ring holder (15a-15d) in a twist-proof manner.

12. Pipe clamp according to one of Claims 1 to 11, **characterized in that** the clamping ring holder (15c, 15b, 15d) has at least one viewing window (51, 52) for an inspection of the pipe stop.

13. Pipe clamp according to one of Claims 1 to 12, **characterized in that** the clamping ring holder (15a-15d) has latching means (21, 43) for its fastening to the connecting piece (2).

14. Pipe clamp according to one of Claims 1 to 13, **characterized in that** the ear gap cover plate (23a-23d) extends beyond the gap (12) in the peripheral direction at least on one side.

15. Pipe clamp according to one of Claims 1 to 14, **characterized in that** the clamping ring (9) is held axially in the clamping ring holder (15a-15d) by way of lugs (25).

## Revendications

1. Collier de serrage pour raccorder un tube (5) à une pièce de raccordement (2) pouvant être enfoncée dans une extrémité du tube (5), comprenant une bague de serrage (9), qui présente le long de sa périphérie une portion annulaire (10) et une oreille (11) s'étendant radialement vers l'extérieur, qui peut être serrée par un outil, un support de bague de serrage (15a, 15b, 15c, 15d) dans lequel est supportée la bague de serrage (9) et une patte de fente d'oreille (23a, 23b, 23c, 23d), qui recouvre la portion annulaire (10) dans la région d'une fente (12) de l'oreille (11), **caractérisé en ce que** la patte de fente d'oreille (23a, 23b, 23c, 23d) est montée sur le support de bague de serrage (15a, 15b, 15c, 15d).

2. Collier de serrage selon la revendication 1, **caractérisé en ce que** la patte de fente d'oreille (23a-23d) est façonnée sur le support de bague de serrage (15a-15d).

3. Collier de serrage selon la revendication 1 ou 2, **caractérisé en ce que** la patte de fente d'oreille (23a-23d) présente un point destiné à la rupture (24), de sorte qu'elle se détache sous l'effet de la compression de la bague de serrage (9) par le support de bague de serrage (15a-15d).

4. Collier de serrage selon la revendication 3, **caractérisé en ce que** le point destiné à la rupture (24) est réalisé sous forme de charnière.

5. Collier de serrage selon la revendication 4, **caractérisé en ce que** la patte de fente d'oreille (23a-23d) s'étend axialement depuis le point destiné à la rupture (24).

6. Collier de serrage selon l'une quelconque des revendications 1 à 5, **caractérisé en ce que** le support de bague de serrage (15a) présente une bride de butée de tube (19).

7. Collier de serrage selon l'une quelconque des revendications 1 à 6, **caractérisé en ce que** le support de bague de serrage (15c, 15d) se compose d'une première et d'une deuxième partie (16, 17 ; 18, 49) qui sont assemblées l'une à l'autre.

8. Collier de serrage selon la revendication 7, **caractérisé en ce que** les au moins deux parties (16, 17 ; 18, 49) sont emboîtées les unes aux autres.

9. Collier de serrage selon l'une quelconque des revendications 1 à 8, **caractérisé en ce que** la bague de serrage (9) est enfoncée axialement de l'avant ou de l'arrière dans le support de bague de serrage (15a-15d).

10. Collier de serrage selon l'une quelconque des revendications 1 à 9, **caractérisé en ce que** le support de bague de serrage (15c, 15b, 15d) présente à une extrémité avant une région de calibrage (26) pour le calibrage du tube (5) à raccorder.

11. Collier de serrage selon l'une quelconque des revendications 1 à 10, **caractérisé en ce que** la bague de serrage (9) est maintenue de manière imperdable dans le support de bague de serrage (15a-15d).

12. Collier de serrage selon l'une quelconque des revendications 1 à 11, **caractérisé en ce que** le support de bague de serrage (15c, 15b, 15d) présente au moins une fenêtre de vision (51, 52) pour un contrôle de la butée du tube.

13. Collier de serrage selon l'une quelconque des revendications 1 à 12, **caractérisé en ce que** le support de bague de serrage (15a-15d) présente des moyens d'encliquetage (21, 43) pour sa fixation sur la pièce de raccordement (2).

14. Collier de serrage selon l'une quelconque des revendications 1 à 13, **caractérisé en ce que** la patte de fente d'oreille (23a-23d) s'étend dans la direction périphérique au moins d'un côté au-delà de la fente (12).

15. Collier de serrage selon l'une quelconque des revendications 1 à 14, **caractérisé en ce que** la bague de serrage (9) est maintenue axialement sur des lobes (25) dans le support de bague de serrage (15a-15d).
